## Europäisches Patentamt

(19) **European Patent Office**

**Office européen des brevets**

(11) Veröffentlichungsnummer: **0 134 577**
**A2**

(12) **EUROPÄISCHE PATENTANMELDUNG**

(21) Anmeldenummer: **84110495.3**

(22) Anmeldetag: **04.09.84**

(51) Int. Cl.⁴: **A 23 N 12/00**

(30) Priorität: **06.09.83 DE 3332048**

(43) Veröffentlichungstag der Anmeldung:
**20.03.85 Patentblatt 85/12**

(84) Benannte Vertragsstaaten:
**AT BE CH DE FR GB IT LI LU NL SE**

(71) Anmelder: **Lange, Fritz**
**Lindenallee 21**
**D-2355 Schönböken(DE)**

(72) Erfinder: **Lange, Fritz**
**Lindenallee 21**
**D-2355 Schönböken(DE)**

(74) Vertreter: **Struck, Willi, Dr.-Ing.**
**Friedrich-Ebert-Strasse 10f**
**D-2080 Pinneberg(DE)**

(54) **Reinigungsvorrichtung für Früchte und dergl.**

㊗ Die Erfindung betrifft eine Vorrichtung zur Reinigung von Gegenständen, insbes. Früchten wie z.B. Rüben, Zuckerrüben, Möhren, Rote Beete, Knollensellerie usw. in rohem Zustand. Sie ist vornehmlich für die Konservenindustrie für die Reinigung von Früchten wie Kartoffeln, Karotten und Rote Beete nach der Vorbehandlung durch Dämpfschäler geeignet und bezweckt die Schaffung einer Vorrichtung, durch die die herkömmlichen Bürstenwaschmaschinen ersetzt und die Früchte auch von sehr fest anhaftenden Unreinheiten wie Verkorkungen usw. befreit werden können, so daß die Verlesearbeiten auf ein Minimum reduziert werden können und infolgedessen eine Leistungserhöhung und auch eine bessere Ausnutzung der Rohware ermöglicht wird.

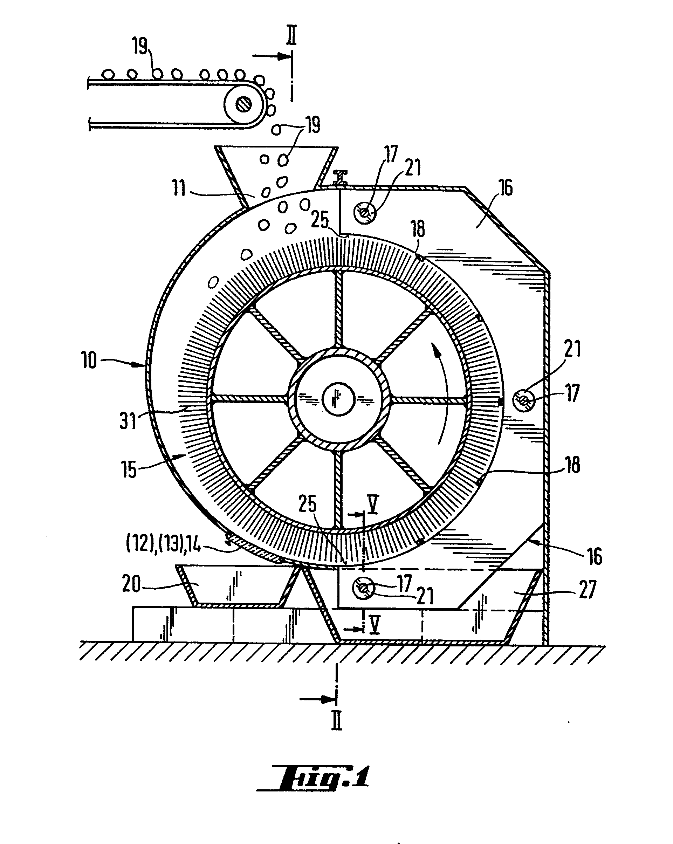

Erfindungsgemäß wird dazu vorgeschlagen, in einem bis auf Zuund Abführungsöffnungen für die Früchte im wesentlichen geschlossenen Gehäuse eine umlaufende Bürste anzuordnen, die wenigstens teilweise von zwischen dem Gehäuse und dem Bürstenumfang angebrachten feststehenden Abriebselementen umhüllt ist (Fig. 1).

_Fig.1_

EP 0 134 577 A2

Die Erfindung betrifft eine Vorrichtung zur Reinigung von Gegenständen, insbes. Früchten wie z.B. Rüben, Zuckerrüben, Möhren, Rote Beete, Knollensellerie usw. in rohem Zustand. Sie ist vornehmlich für die Konservenindustrie für die Reinigung von Früchten wie Kartoffeln, Karotten, Möhren und Rote Beete nach der Vorbehandlung durch Dampfschäler geeignet.

Dazu ist zu bemerken, daß bei Beschädigung der Rohware auch leichter, teilweise in unsichtbarer Weise zerstörte Zellen verkorken und nicht vom Dampf durchdrungen werden können. Solche Stellen an den Früchten sind auch nach dem Durchlauf durch Dampfschäler und Bürstenwaschmaschinen wie in der herkömmlichen Verarbeitung als schmutzige, teilweise noch mit Schalenresten behaftete Höcker erkennbar. Derartige Früchte müssen bisher in aufwendiger Verlesearbeit ausgeschieden werden. Das ist personal-, zeit- und kostenaufwendig.

Zur Vermeidung dieses Mangels bei der bisherigen Arbeitsweise mit den bekannten Maschinen soll erfindungsgemäß eine Vorrichtung geschaffen werden, die nach der herkömmlichen Bürstenwaschmaschine eingesetzt wird und die Früchte auch von den genannten sehr fest anhaftenden Unreinheiten befreit und damit die Aufgabe löst, die Verlesearbeiten auf ein Minimum zu reduzieren, eine höhere Leistung zu erbringen und auch eine bessere Ausnutzung der Rohware zu ermöglichen.

Erfindungsgemäß wird dazu eine Vorrichtung vorgeschlagen, bei der in einem bis auf Zu- und Abführungsöffnungen geschlossenen Gehäuse eine umlaufende Fördertrommel mit am Umfang angeordneten Bürsten, Gummileisten, -fingern oder dergl.
angeordnet ist, die wenigstens teilweise von zwischen dem
Gehäuse und der Fördertrommel angebrachten feststehenden Abriebselementen unhüllt ist. Bei einer bevorzugten Ausfühfungsform der Erfindung sollen die Abriebselemente segmentartige Blechscheiben sein. Die Abriebselemente können durch
Bolzen unter Zwischenschaltung von Distanzringen mit Abstand
zueinander und am Gehäuse befestigt sein. Die Abriebselemente
können in Schlitzen in Profilträgern wie U- oder L-Trägern
geführt und gehalten sein, wodurch die Montage vereinfacht
wird.

In der Regel sollen die Abriebselemente insgesamt eine gerade
Oberfläche aufweisen. Sie können aber auch an der der Fördertrommel zugewandten Seite insgesamt mit einer wellenförmigen
Oberfläche mit näher an der Bürste und weiter von dieser entfernt liegenden Teilen versehen sein. Vorteilhaft hat sich
auch eine insgesamt sägezahnförmige Oberfläche erwiesen, bei
der das Drehen der Frucht an der Fallstufe erleichtert wird.

Als Abriebselement kann auch ein gebogenes Langloch-Blech
dienen, welches zur leichteren Reinigung schwenkbar am Gehäuse
angebracht sein kann.

Weiterhin können auf der der Fördertrommel zugewandten Seite
der Abriebselemente noch besondere Führungs- und Abriebsleisten befestigt sein.

Zur Einstellung der Vorrichtung auf unterschiedlich große Früchte und zur Verstärkung oder Verringerung des Bürstendruckes auf die Früchte, soll die Fördertrommel in Richtung auf die Abriebselemente zu oder davon fort einstellbar im Gehäuse gelagert sein oder auch umgekehrt kann die Fördertrommel fest stehen und die Abriebselemente können verschiebbar sein.

Zur Erreichung unterschiedlicher Behandlungswege der Früchte in der Vorrichtung sollen am unteren Teil des Gehäuses über die Länge der Vorrichtung verteilt, mehrere verschließbare Austrittsöffnungen vorgesehen sein. Unterhalb der Austrittsöffnungen kann eine gemeinsame Auffangrinne für die aus der Vorrichtung abgenommenen Früchte angeordnet sein und unterhalb der Abriebselemente kann im Gehäuse eine Auffangwanne für das beim Schälbetrieb anfallende Abfallmaterial vorgesehen werden.

An Hand der beiliegenden Zeichnungen soll die Erfindung nachfolgend noch näher erläutert werden. Auf den Zeichnungen zeigen in schematischer Darstellung

Fig. 1 eine Querschnitt durch die erfindungsgemäße Vorrichtung,

Fig. 2 eine Längsschnitt durch die Vorrichtung,

Fig. 3 ein einzelnes Abriebselement mit Bolzenbefestigung,

Fig. 4 ein Abriebselement mit Profilleistenträgerhalterung,

Fig. 5 in vergrößerter Darstellung Abriebselemente mit wellenförmiger Gesamtoberfläche,

Fig. 6 Abriebselemente mit sägezahnförmiger Gesamtoberfläche und

Fig. 7 eine Vorrichtung mit einem Langloch-Blech als Abriebselement.

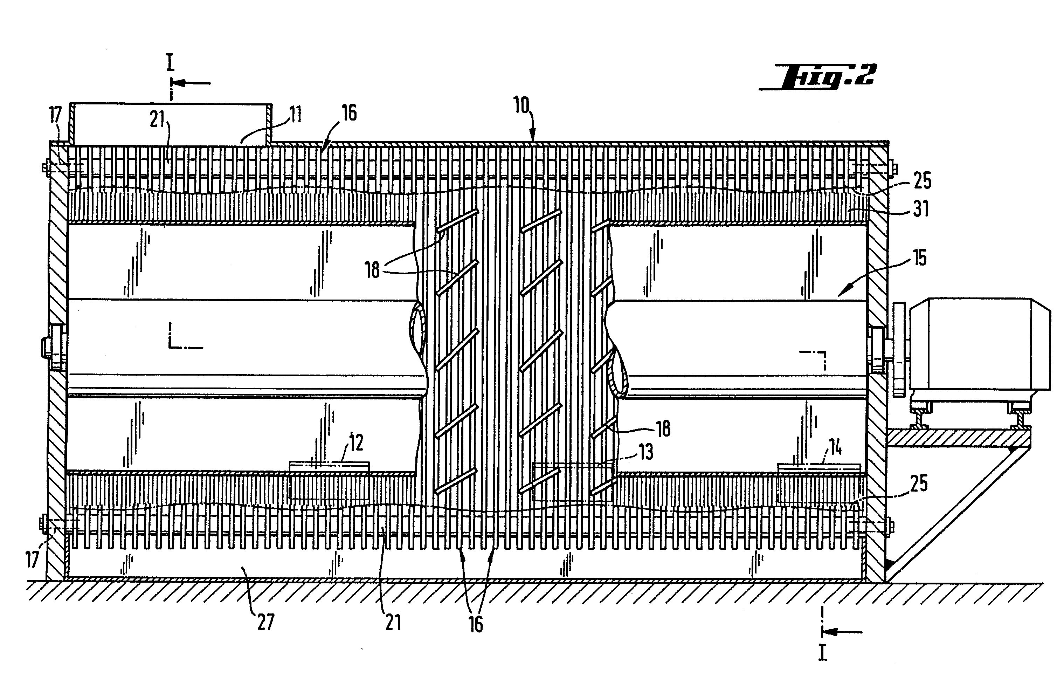

In den Figuren sind gleiche Teile mit gleichen Bezugszeichen versehen. So ist insbesondere in den Figuren 1 und 2 das Gehäuse der Vorrichtung mit 10 bezeichnet. Am Gehäuse befinden sich eine Zuführungsöffnung 11 für die Früchte 19 mit einem Trichter und verschiedene Abführungsöffnungen 12, 13, 14 die verschließbar sind und eventuell ein Sichtfenster aufweisen können, um feststellen zu können, ob die Früchte noch weiterbehandelt werden müssen oder schon entnommen werden können. Unter den Abführungsöffnungen befindet sich eine gemeinsame Auffangrinne 20 für die Früchte und unter den Abriebselementen 16 eine Auffangwanne 27 für den Schälbetrieb.

Im Inneren des Gehäuses 10 läuft eine Fördertrommel 15 um, die mit fest im Gehäuse angebrachten segmentartigen Abriebselementen 16 zusammenarbeitet. Auf der der Fördertrommel zugewandten Seite der Abriebselemente 16 sind noch, wie insbes. Fig.2 erkennen läßt, weitere Abriebselemente 18, die auch gleichzeitig der Führung der Ware durch die Vorrichtung dienen, angebracht.

- 5 -

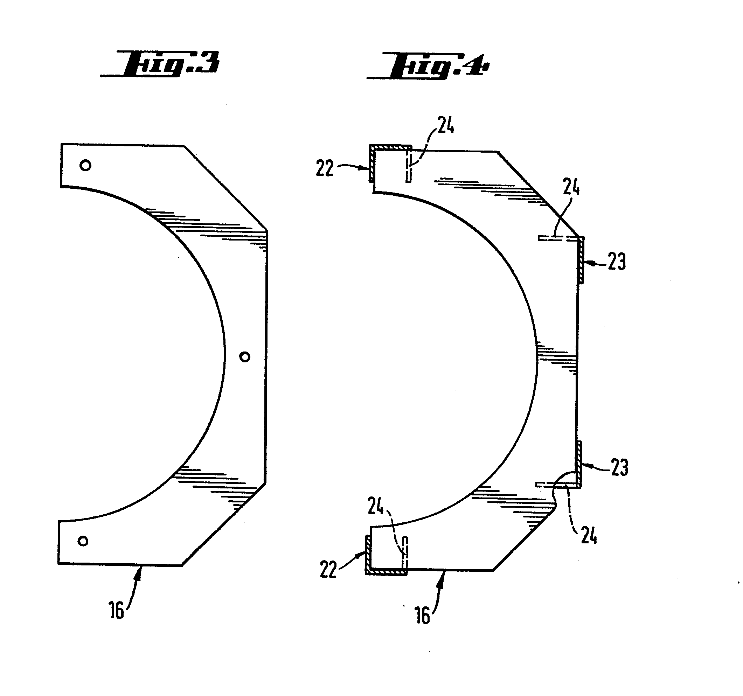

Die Fig. 3 und 4 lassen die segmentartige Ausbildung der Abriebselemente 16 erkennen. Dabei sind in Fig. 3, wie auch aus Fig. 4 zu erkennen ist, die Abriebselemente mittels Bolzen 17 und Abstandsringen 21 zusammengefügt, während in Fig. 4 die Abriebselemente 16 in Schlitzen 24 von U-Eisen-22 und L-Eisen-Trägern 23 geführt und gehalten sind. Durch Entfernen der durch eine Rahmenkonstruktion verbundenen L-Eisen wird eine einfache Montage und Demontage der Abriebselemente ermöglicht.

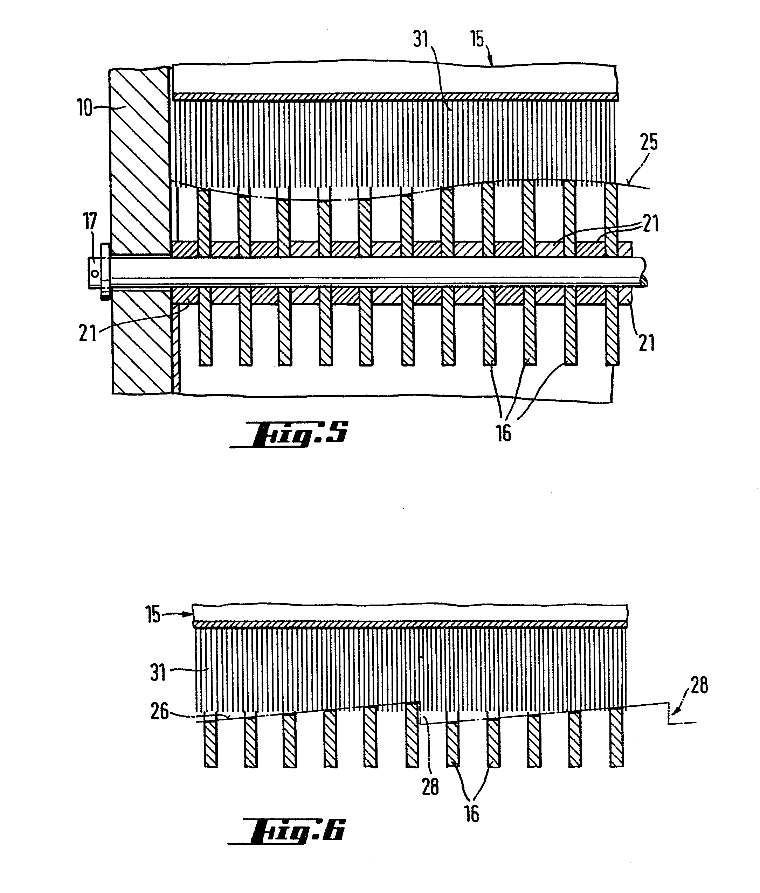

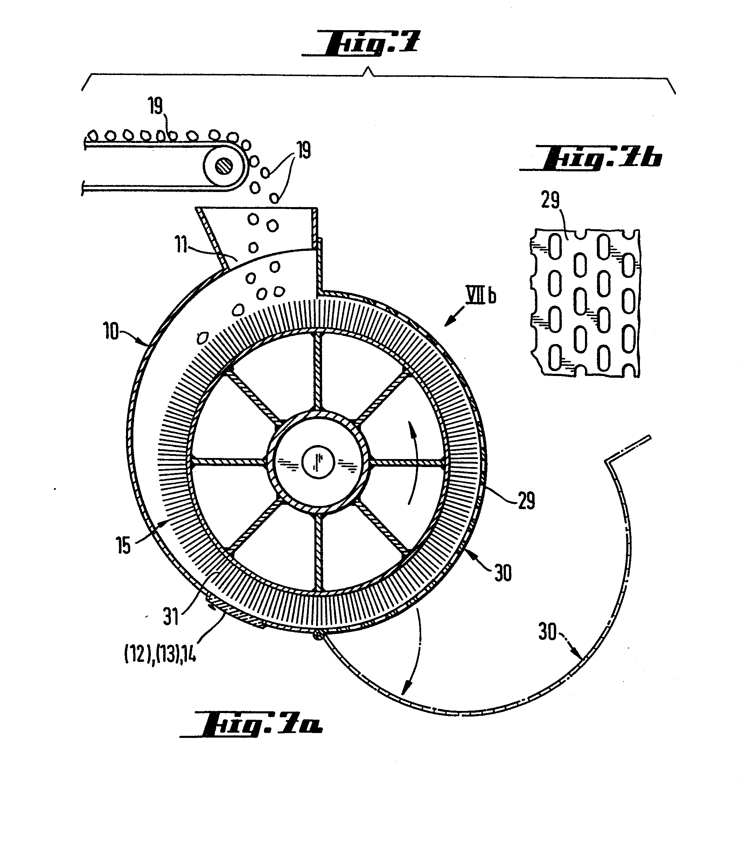

Außer der Zusammenfügung der Abriebselemente ist in Fig. 5 auch deutlich eine insgesamt wellenförmige Oberfläche 25 der Abriebselemente 16 zu erkennen, durch die die Fördertrommel 15 in unterschiedlichen Bereichen mit unterschiedlichem Druck auf die zwischen der Fördertrommel und den Abriebselementen 16 durchlaufende Ware einwirken kann. Fig. 6 läßt eine sägezahnförmige Oberfläche 26 der Abriebselemente 16 mit einer Fallstufe 28, durch die das DRehen der Frucht gesichert wird, erkennen.

Die Arbeitsweise der Vorrichtung ist wie folgt.

Die kontinuierlich durch den Einlauftrichter der Maschine zugeführte Frucht wird durch die rotierende Fördertrommel 15 erfaßt und dem Arbeitsteil der Maschine zugeführt. Die vorgesehene Verstellmöglichkeit der Fördertrommel bzw. der Abriebselemente gestattet

1. die Anpassung an die Größe der jeweils zu bearbeitenden Frucht,

2. die dem Verschmutzungsgrad der Frucht notwendige Druckausübung.

Die Fördertrommel drückt die Frucht gegen den Arbeitsbereich der Maschine. Die schräg in den Arbeitsteil eingebauten Förder- und Abriebs leisten 18 führen die Frucht schräg über die Abriebselemente und übernehmen zugleich einen Teil der Reinigungsleistung und führen schließlich die Frucht in Richtung Maschinenende.

Die Wellen- oder Sägezahnform des Arbeitsbereichs bewirkt, daß durch die Fördertrommel unterschiedlicher Druck auf die Frucht ausgeübt wird, so daß nur im Wellental ein Drehen der Frucht vor den Förder- und Abriebsleisten und dadurch ein zusätzlicher Reinigungseffekt erzielt wird. Die Anordnung der Förder- und Abriebsleisten im Arbeitsteil der Maschine wird so gewählt, daß bei einer angenommenen Arbeitslänge der Maschine von 2 mtr. ein mehrmaliger Durchgang der Frucht durch den Arbeitsbereich möglich ist, wobei je nach Verschmutzungsgrad die Frucht nach jedem Durchgang durch den Arbeitsbereich aus den Auslauföffnungen 12, 13, 14 usw. entlassen werden kann.

Fig. 7 zeigt eine Vorrichtung mit einem gebogenen Langloch-Blech 29 als Abriebselement, welches schwenkbar am Gehäuse angebracht ist, wodurch das Reinigen des Abriebselementes
erleichtert wird.

## Patentansprüche

1. Vorrichtung zur Reinigung von Gegenständen wie insbes. Früchten oder dergl., dadurch gekennzeichnet, daß in einem bis auf Zu- (11) und Abführungsöffnungen (12, 13, 14) für die Früchte im wesentlichen geschlossenen Gehäuse (10) eine umlaufende Fördertrommel (15) mit am Umfang angeordneten Bürsten (31), Gummileisten, -fingern oder dergl. angeordnet ist, die wenigstens teilweise von zwischen dem Gehäuse und dem Bürstenumfang angebrachten feststehenden Abriebselementen (16) umhüllt ist.

2. Vorrichtung nach Anspruch 1, dadurch gekennzeichnet, daß die Abriebselemente (16) segmentartige Blechscheiben sind.

3. Vorrichtung nach Anspruch 1 und 2, dadurch gekennzeichnet, daß die Abriebselemente (16) durch Bolzen (17) unter Zwischenschaltung von Distanzringen (21) mit Abstand zueinander und am Gehäuse (10) befestigt sind.

4. Vorrichtung nach Anspruch 1 und 2, dadurch gekennzeichnet, daß die Abriebselemente (16) in Schlitzen in Profilträgern (22, 23) mit Abstand zueinander geführt und gehalten sind.

5. Vorrichtung nach Anspruch 1 bis 4, dadurch gekennzeichnet, daß die Abriebselemente (16) an der der Fördertrommel (15) zugewandten Seite insgesamt eine wellenförmige Oberfläche (25) mit näher an der Bürste und weiter von dieser entfernt liegenden Teilen aufweisen.

6. Vorrichtung nach Anspruch 1 bis 4, dadurch gekennzeichnet, daß die Abriebselemente (16) an der der Fördertrommel (15) zugewandten Seite insgesamt eine sägezahnförmige Oberfläche (26) aufweisen.

7. Vorrichtung nach Anspruch 1, dadurch gekennzeichnet, daß das Abriebselement ein schwenkbar am Gehäuse (10) angeordnetes Lochblech (29) ist.

8. Vorrichtung nach Anspruch 1 bis 7, dadurch gekennzeichnet, daß auf der der Fördertrommel (15) zugewandten Seite der Abriebselemente (16, 29) besondere Führungs- und Abriebs-

0134577

leisten (18) befestigt sind.

9. Vorrichtung nach Anspruch 1 bis 8, dadurch gekennzeichnet, daß die Führungstrommel (15) in Richtung auf die Abriebselemente (16, 29) bzw. die Abriebselemente in Richtung auf die Fördertrommel zu oder davon fort einstellbar im Gehäuse (10) gelagert ist bzw. sind.

10. Vorrichtung nach Anspruch 1 bis 9, dadurch gekennzeichnet, daß am unteren Teil des Gehäuses (10) über die Länge der Vorrichtung verteilt, mehrere verschließbare Austrittsöffnungen (12, 13, 14) vorgesehen sind.

11. Vorrichtung nach ANspruch 10, dadurch gekennzeichnet, daß unterhalb der Austrittsöffnungen (12, 13, 14) eine gemeinsame Auffangrinne (20) angeordnet ist.

12. Vorrichtung nach Anspruch 1 bis 11, dadurch gekennzeichnet, daß unterhalb der Ab riebselemente (16) im Gehäuse (10) eine Auffangwanne (27) für das beim Schälbetrieb anfallende Material angebracht ist.

0134577

**Fig.1**

Fig.2

2/5

0134577

0134577

**Fig.3**

**Fig.4**

0134577

Fig.5

Fig.6

## Fig.7

### Fig.7b

29

19

19

11

10

VIIb

29

15

30

31

30

(12),(13),14

## Fig.7a